# EUROPÄISCHE PATENTSCHRIFT

(11) **EP 4 211 382 B1**
(45) Veröffentlichungstag und Bekanntmachung des Hinweises auf die Patenterteilung: **07.05.2025**
(21) Anmeldenummer: 21772739.5
(22) Anmeldetag: 31.08.2021
(51) Int. Cl.: F16L 37/14, F16L 37/35, F16L 37/42

(54) **KOPPLUNGSEINRICHTUNG FÜR FLUIDLEITUNGEN**
COUPLING DEVICE FOR FLUID LINES
DISPOSITIF D'ACCOUPLEMENT POUR CONDUITES DE FLUIDE

(30) Priorität: 07.09.2020 DE 102020211212
(43) Veröffentlichungstag der Anmeldung: 19.07.2023
(73) Patentinhaber: Fränkische Industrial Pipes GmbH & Co. KG, 97486 Königsberg (DE)
(72) Erfinder: SCHRÖTER, Sören, 97486 Köningsberg (DE)
(74) Vertreter: Weickmann & Weickmann PartmbB
(86) Internationale Anmeldenummer: PCT/EP2021/073956
(87) Internationale Veröffentlichungsnummer: WO 2022/049050

(56) Entgegenhaltungen:
- WO-A1-2019/190658
- DE-A1- 10 013 488
- FR-A5- 2 166 770
- US-A- 2 322 877
- US-A- 4 700 743
- US-A- 5 540 250
- US-A1- 2014 083 542
- US-A1- 2017 307 123

## Beschreibung

Die vorliegende Erfindung betrifft eine Kopplungseinrichtung für Fluidleitungen, welche eine Aufnahmeeinheit und eine Steckeinheit umfasst.

Es sind aus dem Stand der Technik Kopplungseinrichtungen bekannt, welche dazu eingerichtet sind, zwei Fluidleitungen miteinander zu koppeln. Dabei ergibt sich aber zumeist das Problem, dass an der Koppelstelle, im Vergleich zu der übrigen Fluidleitung, eine deutlich verschlechterte Fluiddynamik auftritt, da es durch die Komponenten der Kopplungseinrichtung zu Verwirbelungen und Totbereichen des zu leitenden Fluids kommen kann. Insbesondere bei der Verwendung von Elementen, welche durch Federelemente in eine bestimmte Stellung vorbelastet sind, kann ein verwendetes Federelement eine starke Störung der Fluidströmung im Bereich der Kopplungseinrichtung hervorrufen.

Ferner kann es durch das Vorhandensein von Totbereichen zu einer Ansammlung von Fluid darin kommen, welches dann beim Trennen der Kopplungseinrichtung in einer unkontrollierten Weise aus dieser austreten kann. Dies kann zu einer Verschmutzung der Umgebung oder, beispielsweise im Fall von Gefahrenstoffen, welche innerhalb der Fluidleitung befördert werden, zu einer Schädigung der Umgebung und/oder des Bedieners der Kopplungseinrichtung führen.

Aus dem Dokument DE 100 13 488 A1, welches als nächstliegender Stand der Technik erachtet wird, ist eine Kopplungseinrichtung für Fluidleitungen bekannt, deren Aufnahmeeinheit dazu eingerichtet ist, dass deren Fluidströmungskanal vermittels eines Verschlusselements fluidisch abgedichtet oder freigegeben werden kann. Ferner sei auf die Dokumente US 5 540 250 A, US 2014/083542 A1, US 2017/307123 A1, FR 2 166 770 A5, US 2 322 877 A, WO 2019/190658 A1 und US 4 700 743 A hingewiesen.

Es ist daher die Aufgabe der vorliegenden Erfindung, eine Kopplungseinrichtung für Fluidleitungen bereitzustellen, deren Strömungseigenschaften verbessert und zugleich entsprechende Totbereiche reduziert sind.

Diese Aufgabe wird erfindungsgemäß durch eine Kopplungseinrichtung für Fluidleitungen nach Anspruch 1 gelöst.

Die erfindungsgemäße Anordnung der Kopplungseinrichtung bzw. der Aufnahmeeinheit ermöglicht es, dass das Federelement, zumindest in der Freigabestellung des zugehörigen Verschlusselements, in welcher ein Durchtritt von Fluid durch die Aufnahmeeinheit ermöglicht ist, von dem durch die Aufnahmeeinheit strömenden Fluid getrennt angeordnet ist, wodurch eine verbesserte Fluidströmung durch die Aufnahmeeinheit erreicht werden kann. Ferner kann auf diese Weise verhindert werden, dass sich Fluid in dem Bereich, in welchem die Feder angeordnet ist, ansammelt und bei einem Lösen der Kopplungseinrichtung, das heißt der Aufnahmeeinheit von einer komplementären Steckeinheit, in einer unkontrollierten Weise aus der Aufnahmeeinheit austritt. Das Verschlusselement kann mehrteilig, insbesondere zweiteilig, aufgebaut sein, wobei die einzelnen Bauteile des Verschlusselements beispielsweise über zusammenpassende Innen- und Außengewinde miteinander verbunden werden können, um die Montage des Verschlusselements zu vereinfachen.

Die Aufnahmeeinheit kann insbesondere dazu eingerichtet sein, mit einer, insbesondere genormten, Standard-Steckeinheit verbindbar zu sein.

Es sei bereits an dieser Stelle erwähnt, dass die Aufnahmeeinheit bzw. die gesamte übergeordnete Kopplungseinrichtung, natürlich sowohl zur Verbindung von Glattrohren als auch zur Verbindung von Wellrohren eingerichtet sein kann. Dabei bietet es sich an, wenn Verbindungsabschnitte der Kopplungseinrichtung, an welchen die Kopplungseinrichtung mit entsprechenden Fluidleitungen zu verbinden ist, ein mit einem Sägezahnprofil versehenes Stutzenelement aufweist. Zusätzlich kann an einem solchen Stutzenelement wenigstens eine Nut vorgesehen sein, in welcher ein Dichtungselement, wie beispielsweise ein O-Ring, aufgenommen werden kann, um gegenüber der Fluidleitung abzudichten.

Das Verschlusselement kann für eine bessere Führung in der Aufnahmeeinheit an seinem Außenumfang eine Mehrzahl von Rippen, insbesondere wenigstens drei Rippen, aufweisen, welche von dem Verschlusselement nach radial außen vorstehen und an ihrem radial äußeren Ende mit einem jeweiligen Abschnitt der umgebenden Aufnahmeeinheit in Kontakt treten können.

Insbesondere kann das Federelement eine Wellenfeder sein. Im Vergleich zu einer Spiralfeder benötigt eine Wellenfeder weniger Bauraum bei gleicher Federkraft.

Vorteilhafterweise kann das Federelement radial außerhalb des zylindrischen Abschnitts angeordnet sein. Somit kann der zylindrische Abschnitt das Federelement gegenüber dem radial innen liegenden Strömungskanal an dem inneren Umfang des Federelements abschirmen.

In einer Weiterbildung der vorliegenden Erfindung können die Durchbrechungen des Teilabschnitts als vier fensterartige Öffnungen ausgebildet sein. Insbesondere sind die Durchbrechungen so angeordnet, dass, wenn das Verschlusselement seine Schließstellung verlassen hat, Fluid durch die Durchbrechungen von radial außerhalb des Verschlusselements nach radial innen strömt, bzw. für den Fall einer entgegengesetzten Strömungsrichtung umgekehrt. So kann auch der zylindrische, durchbrechungsfreie Abschnitt des Verschlusselements derart mit der Aufnahmeeinheit, zum Beispiel einem Vorsprung der Aufnahmeeinheit, zusammenwirken, dass im Wesentlichen sämtliches den Bereich der Durchbrechungen des Verschlusselements erreichendes Fluid durch die Durchbrechungen in das Innere des Verschlusselements geleitet wird, anstatt radial außen daran vorbei zu strömen.

Die Aufnahmeeinheit kann ein Gehäuse aufweisen, in welchem das Verschlusselement aufgenommen ist, wobei das Gehäuse einen sich nach radial innen erstreckenden Vorsprung aufweisen kann, welcher dazu eingerichtet ist, mit dem Verschlusselement, insbesondere einem an dem Verschlusselement angeordneten Dichtungselement, in der Schließstellung des Verschlusselements in Kontakt zu treten. Dabei kann das Dichtungselement von dem Verschlusselement separat, zum Beispiel als O-Ring, ausgebildet sein. Wie bereits voranstehend beschrieben, kann dieser Vorsprung dazu eingerichtet sein, sowohl mit dem Dichtungselement in der Schließstellung des Verschlusselements als auch mit dem zylindrischen Abschnitt des Verschlusselements, insbesondere in der Freigabestellung des Verschlusselements, in Kontakt zu treten. Der Vorsprung kann dabei insbesondere integral mit dem Gehäuse der Aufnahmeeinheit ausgebildet sein.

Hierfür kann der Vorsprung mit einer schrägen Flanke versehen sein, so dass sich durch den Vorsprung in einer Richtung von der Freigabestellung zu der Schließstellung des Verschlusselements ein allmählich verringernder Querschnitt des Innenraums des Gehäuses ergibt. Durch einen derartigen Vorsprung kann das Verschlusselement zum Beispiel beim Bewegen in die Schließstellung geführt und zentriert werden. Durch die schrägen Flanken kann dem Dichtungselement eine definierte Dichtungsfläche zur Anlage bereitgestellt werden, so dass ein Abdichten durch das Dichtungselement gewährleistet werden kann. Darüber hinaus können die schrägen Flanken die Fluidströmung von radial außen durch die Durchbrechungen des Verschlusselements nach radial innen leiten und somit verbessern.

Das Gehäuse der Aufnahmeeinheit kann mehrteilig, insbesondere zweiteilig, ausgebildet sein. Insbesondere kann das Gehäuse der Aufnahmeeinheit in einer axialen Richtung der Bewegungsachse des Verschlusselements zwischen der Schließstellung und der Freigabestellung betrachtet mehrteilig ausgebildet sein. Das heißt, das Gehäuse der Aufnahmeeinheit kann zum Beispiel einen im Wesentlichen rohrförmigen Abschnitt umfassen, welcher den radial nach innen vorstehenden Vorsprung aufweist, und ferner ein Abschlusselement umfassen, an welchem ein Verbindungsabschnitt, insbesondere ein Stutzenelement mit dem ersten Ende der Aufnahmeeinheit zur Verbindung mit einer Fluidleitung ausgebildet ist. Die Aufteilung des Gehäuses in rohrförmigen Abschnitt und Abschlusselement kann es ermöglichen, dass das Verschlusselement teilweise von der einen Seite und teilweise von der anderen Seite der Aufnahmeeinheit in diese eingeführt wird und innerhalb der Aufnahmeeinheit montiert wird.

Es kann ein erster Gehäuseteil, welcher das erste Ende umfasst, mit einem zweiten Gehäuseteil, welcher das zweite Ende umfasst, fluiddicht verbunden sein, insbesondere unter Verwendung eines Rotationsschweißverfahrens oder eines Laserschweißverfahrens. Beispielsweise kann das voranstehend beschriebene Abschlusselement mit dem rohrförmigen Abschnitt an einer Stirnseite davon fluiddicht verbunden sein.

Vorteilhafterweise kann an dem Gehäuse wenigstens ein vorstehender Steg angeordnet sein, welcher dazu eingerichtet ist, in Anlage gegen das Verschlusselement die Freigabestellung des Verschlusselements zu definieren. Die Freigabestellung des Verschlusselements kann insbesondere durch Anlage des Verschlusselements gegen das freie Ende des wenigstens einen Stegs definiert sein. Die Stege können zum Beispiel umfänglich um eine Mündung eines Fluidströmungskanals, welcher radial innerhalb des Stutzenelements gebildet ist, angeordnet sein und sich von dort in Richtung des röhrenförmigen Abschnitts des Gehäuses der Aufnahmeeinheit erstrecken. Das heißt, in der Freigabestellung des Verschlusselements strömt Fluid, welches aus dem Fluidströmungskanal innerhalb des Stutzenelements austritt, zwischen den Stegen hindurch nach radial außen, umströmt den Abschnitt des Verschlusselements, an welchem das Dichtungselement angeordnet ist, und strömt von dort durch die Durchgangsöffnungen des Verschlusselements nach radial innen und durch das Verschlusselement aus der Aufnahmeeinheit.

Wie bereits zuvor angedeutet, wird im Rahmen dieser Beschreibung zum Zwecke der Einfachheit maßgeblich auf die Strömungsrichtung von der Aufnahmeeinheit zu der Steckeinheit eingegangen, aber die erfindungsgemäße Aufnahmeeinheit bzw. die erfindungsgemäße Kopplungseinrichtung sind natürlich ebenso für eine entgegengesetzte Strömungsrichtung geeignet. Die Kopplungseinrichtung kann insbesondere für Drücke eines darin strömenden Fluids von 2 bar bis 5 bar eingerichtet sein.

Erfindungsgemäß ist die Gegenanlagefläche des Verschlusselements der Aufnahmeeinheit als von dem Verschlusselement der Aufnahmeeinheit in radialer Richtung abstehender Kragen ausgebildet. Durch den radial abstehenden Kragen, welcher insbesondere an einer der Steckeinheit zugewandten Stirnfläche des zylindrischen Abschnitts des Verschlusselements ausgebildet ist, kann ein Flächenbereich der Gegenanlagefläche vergrößert werden und somit zum Beispiel ein Abgleiten der Anlagefläche der Steckeinheit an der Gegenanlagefläche vermieden werden. An der Seite des Kragens, welche der Gegenanlagefläche zum Kontaktieren der Steckeinheit entgegengesetzt ist, kann das Federelement abgestützt sein, welches das Verschlusselement der Aufnahmeeinheit in die Schließstellung vorbelastet. Das andere Ende des Federelements der Aufnahmeeinheit kann beispielsweise an dem Vorsprung des Gehäuses der Aufnahmeeinheit, insbesondere einer sich in radialer Richtung zu dem Gehäuse der Aufnahmeeinheit erstreckenden Flanke des Vorsprungs, abgestützt sein.

In einer Weiterbildung der vorliegenden Erfindung kann auch die Steckeinheit ein Verschlusselement umfassen, welches dazu eingerichtet ist, in einer Schließstellung den Fluidströmungskanal der Steckeinheit zwischen einem, dem ersten Ende in Bezug auf eine Hauptströmungsrichtung entlang des Fluidströmungskanals entgegengesetzten, zweiten Ende und dem ersten Ende der Steckeinheit fluidisch abzudichten, wobei das Verschlusselement der Steckeinheit zwischen der Schließstellung und einer Freigabestellung verlagerbar ist, wobei das Verschlusselement der Steckeinheit unter Verwendung eines Federelements in die Schließstellung vorbelastet ist. Das Federelement kann an der zu dem ersten Ende weisenden Seite des Verschlusselements der Steckeinheit angeordnet sein. Das Federelement der Steckeinheit kann ebenfalls eine Wellenfeder sein.

Analog zu dem oben beschriebenen mehrteiligen Aufbau des Gehäuses der Aufnahmeeinheit, kann auch ein Gehäuse der Steckeinheit mehrteilig, insbesondere zweiteilig, ausgebildet sein. Auch hier kann ein im Wesentlichen röhrenförmiger Abschnitt an einer Stirnseite fluiddicht mit einem Abschlusselement verbunden sein, an welchem ein Stutzenelement zur Verbindung mit einer Fluidleitung angeordnet ist.

Die Steckeinheit kann, insbesondere an der dem Abschlusselement entgegengesetzten Stirnseite des röhrenförmigen Abschnitts des Gehäuses der Steckeinheit, einen nach radial innen abstehenden Vorsprung aufweisen, welcher, wie oben in Bezug auf die Aufnahmeeinheit beschrieben, eine schräge Flanke aufweisen kann, über welche das Verschlusselement der Steckeinheit zentriert werden kann und welche einem an dem Verschlusselement der Steckeinheit angeordneten Dichtungselement eine entsprechende Anlagefläche bietet.

Das Verschlusselement der Steckeinheit kann in einer Richtung von dem zweiten Ende der Steckeinheit zu erstem Ende der Steckeinheit einen ansteigenden Durchmesser aufweisen. Zum Beispiel kann das Verschlusselement der Steckeinheit einen ersten im Wesentlichen zylindrischen Abschnitt umfassen, an dessen äußerem Umfang das Dichtungselement zum Abdichten gegenüber dem Gehäuse der Steckeinheit angeordnet ist. In Strömungsrichtung des Fluids von der Aufnahmeeinheit zu der Steckeinheit betrachtet, kann sich an den ersten zylindrischen Abschnitt ein konischer Abschnitt anschließen, über welchen sich ein Außendurchmesser des Verschlusselements der Steckeinheit vergrößert. Darauf kann ein zweiter im Wesentlichen zylindrischer Abschnitt folgen, dessen Außendurchmesser größer ist als der des ersten zylindrischen Abschnitts. Im Bereich des konischen Abschnitts können sektorartige Durchbrechungen vorgesehen sein, so dass der zweite zylindrische Abschnitt, welcher als Ring ausgebildet ist, mit dem ersten zylindrischen Abschnitt lediglich über verbleibende Stege verbunden sein kann. Das heißt, in der Freigabestellung des Verschlusselements der Steckeinheit, kann Fluid an dem Außenumfang des ersten zylindrischen Abschnitts des Verschlusselements der Steckeinheit vorbeiströmen und dann über die Durchbrechungen des konischen Abschnitts radial innen durch den zweiten zylindrischen Abschnitt strömen.

Diese düsenartige Form des Verschlusselements der Steckeinheit kann Verwirbelungen in der Fluidströmung im Bereich des Steckelements weitestgehend reduzieren, so dass eine hohe Durchflussgeschwindigkeit durch das Steckelement erreicht werden kann.

Wenn das Federelement an der freien Stirnfläche des zweiten zylindrischen Abschnitts anliegt, durchströmt das Fluid das Federelement ebenfalls radial innen.

Erfindungsgemäß weist das Verschlusselement der Aufnahmeeinheit einen zentralen Bolzen auf, welcher ein freies Ende aufweist, welches sich in Richtung des zweiten Endes der Aufnahmeeinheit erstreckt, und welcher dazu eingerichtet ist, auf ein Einführen der Steckeinheit in die Aufnahmeeinheit hin, insbesondere mit seinem freien Ende, gegen eine an dem Verschlusselement der Steckeinheit ausgebildete Bolzen-Aufnahmefläche anzuliegen, so dass, auf ein Fortsetzen des Einführens der Steckeinheit in die Aufnahmeeinheit hin, das Verschlusselement der Steckeinheit bzw. das Verschlusselement der Aufnahmeeinheit aus seiner Schließstellung in Richtung der Freigabestellung verlagert wird. Die Bolzen-Aufnahmefläche kann insbesondere an einer freien Stirnfläche des ersten zylindrischen Abschnitts des Verschlusselements der Steckeinheit ausgebildet sein.

Dabei können/kann der Bolzen des Verschlusselements der Aufnahmeeinheit und/oder die Bolzen-Aufnahmefläche des Verschlusselements der Steckeinheit derart bemessen sein, dass der Bolzen erst dann mit der Bolzen-Aufnahmefläche in Kontakt tritt, wenn das Gehäuse der Steckeinheit mit einer Dichtungseinrichtung in Kontakt getreten ist, welche an der Aufnahmeeinheit angeordnet ist, und welches eingerichtet ist, zwischen der Aufnahmeeinheit und der Steckeinheit abzudichten, so dass Fluid daran gehindert werden kann, aus der Kopplungseinrichtung zu einer Außenseite hin auszutreten.

Eine Federkraft des Federelements, welches auf das Verschlusselement der Steckeinheit einwirkt, kann geringer, insbesondere deutlich geringer, sein als eine Federkraft des Federelements, welches auf das Verschlusselement der Aufnahmeeinheit einwirkt, so dass, auf ein Einführen der Steckeinheit in die Aufnahmeeinheit hin, zuerst das Verschlusselement der Steckeinheit aus seiner Schließstellung in seine Freigabestellung verlagert wird und anschließend, auf ein Fortsetzen des Einführens der Steckeinheit in die Aufnahmeeinheit hin, das Verschlusselement der Aufnahmeeinheit aus seiner Schließstellung in seine Freigabestellung verlagert wird. Auf diese Weise kann, unter der Annahme, dass die Fluidströmungsrichtung durch die Kopplungseinrichtung von der Aufnahmeeinheit zu der Steckeinheit verläuft, gewährleistet werden, dass eine Fluidströmung durch die Aufnahmeeinheit und damit durch die Kopplungseinrichtung erst erlaubt wird, wenn die Steckeinheit bereits vollständig geöffnet ist, das heißt sich das Verschlusselement der Steckeinheit in der Freigabestellung befindet.

Die Kopplungseinrichtung kann zum Beispiel in ihrem gekoppelten Zustand zwischen Aufnahmeeinheit und Steckeinheit über ein Sicherungselement gegenüber einem Lösen der Steckeinheit von der Aufnahmeeinheit gesichert werden.

Die Aufnahmeeinheit und/oder die Steckeinheit und/oder das jeweilige Verschlusselement kann aus Kunststoff, insbesondere aus Polyamid, vorteilhafterweise aus PA6 GF30, hergestellt sein.

Im Folgenden wird die vorliegende Erfindung anhand bevorzugter Ausführungsbeispiele in größerem Detail mit Bezug auf die begleitenden Zeichnungen beschrieben werden. Es stellt dar:
- Figur 1: eine perspektivische Explosionsansicht einer erfindungsgemäßen Kopplungseinrichtung gemäß einem ersten Ausführungsbeispiel;
- Figur 2: eine Seitenquerschnittsansicht einer Aufnahmeeinheit gemäß dem ersten Ausführungsbeispiel;
- Figur 3: eine Seitenquerschnittsansicht einer Steckeinheit;
- Figur 4: eine Seitenquerschnittsansicht einer erfindungsgemäßen Kopplungseinrichtung gemäß dem ersten Ausführungsbeispiel, wobei ein Durchfluss von Fluid versperrt ist;
- Figur 5: eine Seitenquerschnittsansicht der erfindungsgemäßen Kopplungseinrichtung aus Figur 4, wobei ein Durchfluss von Fluid erlaubt ist;
- Figur 6: eine Seitenquerschnittsansicht einer Aufnahmeeinheit gemäß einem zweiten Ausführungsbeispiel, wobei ein Durchfluss von Fluid versperrt ist;
- Figur 7: eine Seitenquerschnittsansicht der Aufnahmeeinheit aus Figur 6, wobei ein Durchfluss von Fluid erlaubt ist;
- Figur 8: eine perspektivische Ansicht eines Verschlusselements des Ausführungsbeispiels aus Figuren 6 und 7; und
- Figur 9: eine Seitenquerschnittsansicht einer erfindungsgemäßen Kopplungseinrichtung, basierend auf der Aufnahmeeinheit des zweiten Ausführungsbeispiels sowie einer zu der Aufnahmeeinheit passenden Steckeinheit.

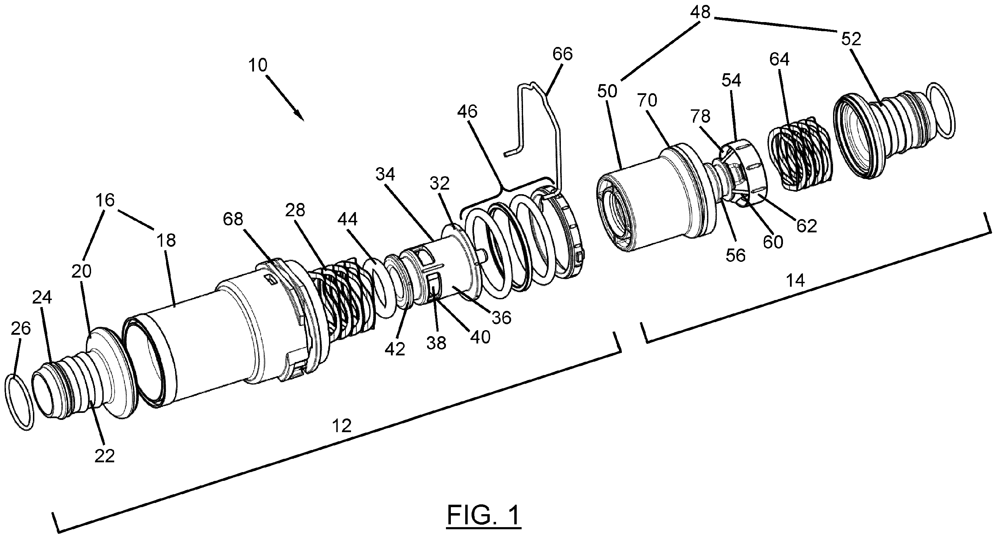

In Figur 1 ist eine erfindungsgemäße Kopplungseinrichtung gemäß einem ersten Ausführungsbeispiel allgemein mit dem Bezugszeichen 10 bezeichnet. Die Kopplungseinrichtung 10 umfasst eine Aufnahmeeinheit 12 und eine Steckeinheit 14. Die Aufnahmeeinheit 12 umfasst ein Gehäuse 16, welches wiederum einen im Wesentlichen röhrenförmigen Abschnitt 18 und ein Abschlusselement 20 umfasst, wobei das Abschlusselement 20 mit einer (in Figur 1 links dargestellten) Stirnfläche des röhrenförmigen Abschnitts 18 verbunden werden kann. An dem Abschlusselement 20 ist im ersten Ausführungsbeispiel ein Stutzenelement 22 ausgebildet, mit welchem eine Fluidleitung, wie beispielsweise ein Glattrohr, gekoppelt werden kann. An dem Stutzenelement 22 ist eine Nut 24 vorgesehen, um ein Dichtungselement 26, hier einen O-Ring, aufzunehmen.

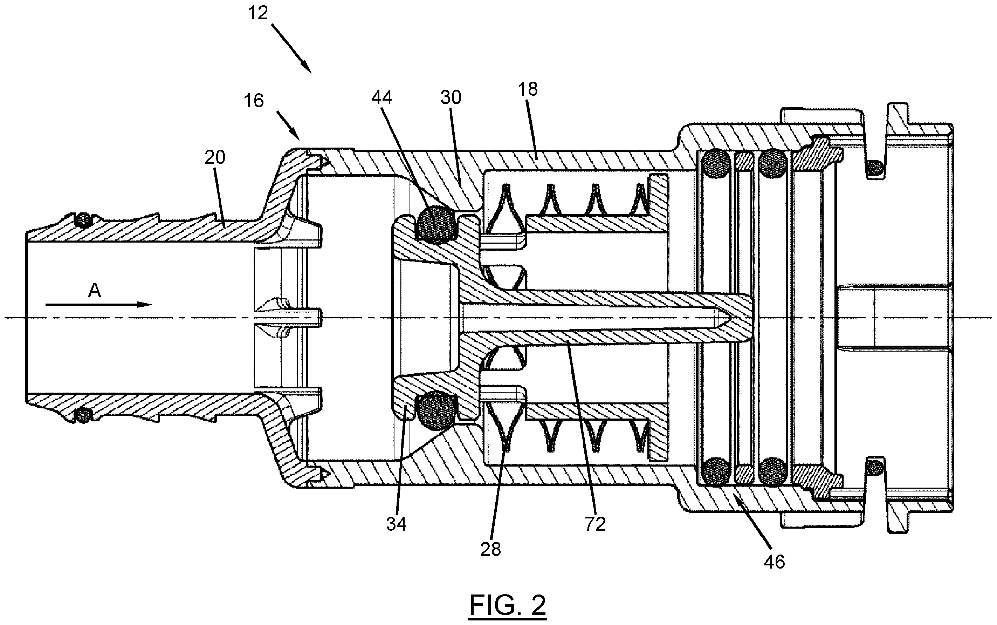

Innerhalb des Gehäuses 16 der Aufnahmeeinheit 12 ist eine Wellenfeder 28 angeordnet, welche an ihrem einen Ende gegen einen Vorsprung 30 (siehe Figur 2) des röhrenförmigen Abschnitts 18 des Gehäuses 16 der Aufnahmeeinheit, welcher nach radial innen vorsteht, und an ihrem anderen Ende gegen einen Kragen 32 eines Verschlusselements 34 abgestützt ist.

Das Verschlusselement 34 umfasst einen sich an den Kragen 32 anschließenden zylindrischen Abschnitt 36, welcher durchbrechungsfrei ausgebildet ist, an welchen sich wiederum (in Figur 1 links) ein mit Durchbrechungen 38 versehener Abschnitt 40 anschließt. An derjenigen Seite des durchbrochenen Abschnitts 40 des Verschlusselements 34, welche dem zylindrischen Abschnitt 36 entgegengesetzt ist, ist ein Dichtungselement-Aufnahmeabschnitt 42 vorgesehen, welcher dazu eingerichtet ist, ein Dichtungselement 44 aufzunehmen. Das Dichtungselement 44 ist dazu eingerichtet, das Verschlusselement 34 gegenüber einer Innenwandung, insbesondere dem Vorsprung 30, des Gehäuses 16 der Aufnahmeeinheit 12 abzudichten.

In Figur 1 ist rechts von dem Verschlusselement 34 der Aufnahmeeinheit 12 eine Dichtungseinrichtung 46 dargestellt, welche an einer Innenseite des Gehäuses 16 bzw. des röhrenförmigen Abschnitts 18 des Gehäuses 16 der Aufnahmeeinheit 12 angeordnet ist, um die Aufnahmeeinheit 12 gegenüber der Steckeinheit 14 abzudichten, so dass Fluid daran gehindert werden kann, zwischen der Aufnahmeeinheit 12 und der Steckeinheit 14 nach außen zu treten.

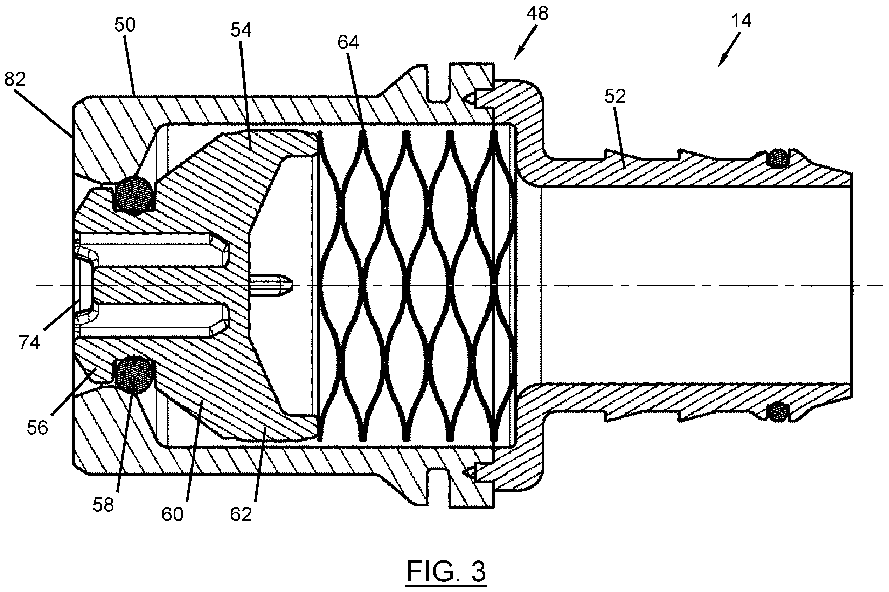

Die Steckeinheit 14 umfasst ein Gehäuse 48, welches einen im Wesentlichen röhrenförmigen Abschnitt 50 und ein weiteres Abschlusselement 52 umfasst, wobei das weitere Abschlusselement 52 generell analog zu dem Abschlusselement 20 der Aufnahmeeinheit 12 ausgebildet ist. Innerhalb des Gehäuses 48 der Steckeinheit 14 ist ein Verschlusselement 54 der Steckeinheit 14 angeordnet (siehe auch Figur 3), welches einen ersten zylindrischen Abschnitt 56, an welchem ein Dichtungselement 58 aufgenommen ist, einen konischen Abschnitt 60, entlang welchem sich der Außendurchmesser des Verschlusselements 54 der Steckeinheit 14 vergrößert, und einen zweiten zylindrischen Abschnitt 62 umfasst. Das freie Ende (das in Figur 1 rechts dargestellte Ende) des zweiten zylindrischen Abschnitts 62 des Verschlusselements 54 der Steckeinheit 14 steht mit einer Wellenfeder 64 der Steckeinheit 14 in Kontakt, welche, unter Abstützung gegen das weiteren Abschlusselement 52 der Steckeinheit 14, das Verschlusselement 54 (in Figur 1 nach links) vorbelastet.

In Figur 1 ist ferner ein Sicherungselement 66 zu sehen, welches, in einem vollständig verbundenen Zustand der Aufnahmeeinheit 12 und der Steckeinheit 14, in einer radialen Richtung zu der Kopplungseinrichtung 10 durch einen Aufnahmeraum 68 der Aufnahmeeinheit 12 und in eine Aufnahmenut 70 der Steckeinheit 14 lösbar eingeführt werden kann, um eine axiale Verlagerung der Steckeinheit 14 relativ zu der Aufnahmeeinheit 12 und damit ein Lösen der Kopplungseinrichtung 10 zu verhindern.

In Figur 2 ist nun eine vergrößerte Seitenquerschnittsansicht der Aufnahmeeinheit 12 in ihrem zusammengebauten Zustand dargestellt. Dabei ist zu erkennen, dass die Wellenfeder 28 das Verschlusselement 34 der Aufnahmeeinheit 12 in die in Figur 2 dargestellte Schließstellung vorbelastet. In dieser Schließstellung des Verschlusselements 34 der Aufnahmeeinheit 12 bewirkt das Dichtungselement 44 eine fluidische Abdichtung zwischen dem Verschlusselement 34 und dem Vorsprung 30 des Gehäuses 16 der Aufnahmeeinheit 12. Somit wird Fluid, von welchem hier angenommen wird, dass es in der durch den Pfeil A angezeigten Strömungsrichtung strömt, daran gehindert, an dem Dichtungselement 44 vorbei zu strömen.

Ferner ist in der Seitenquerschnittsansicht aus Figur 2 zu erkennen, dass das Verschlusselement 34 einen zentralen Bolzen 72 aufweist, welcher in Richtung derjenigen Seite der Aufnahmeeinheit 16 vorsteht, über welche die Steckeinheit 14 in die Aufnahmeeinheit 12 eingeführt werden kann.

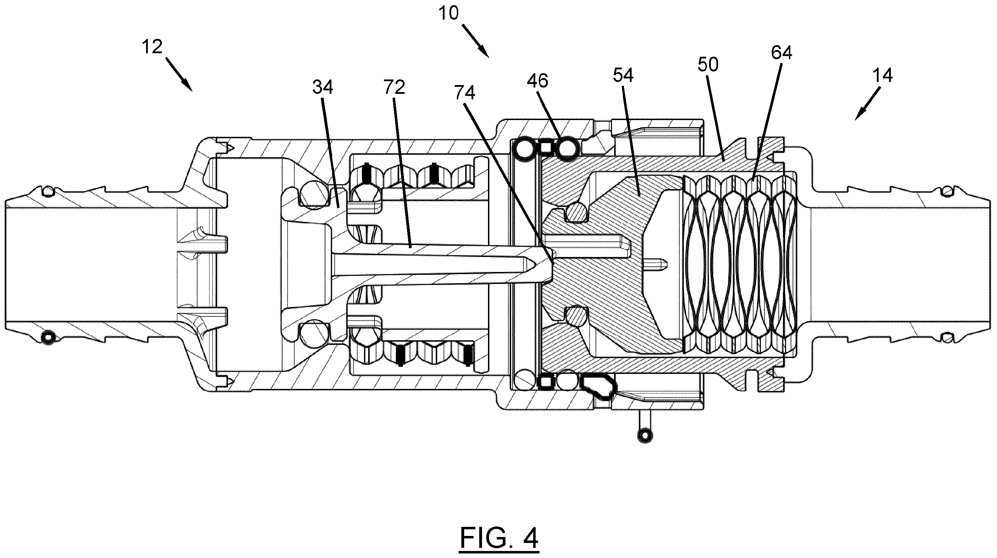

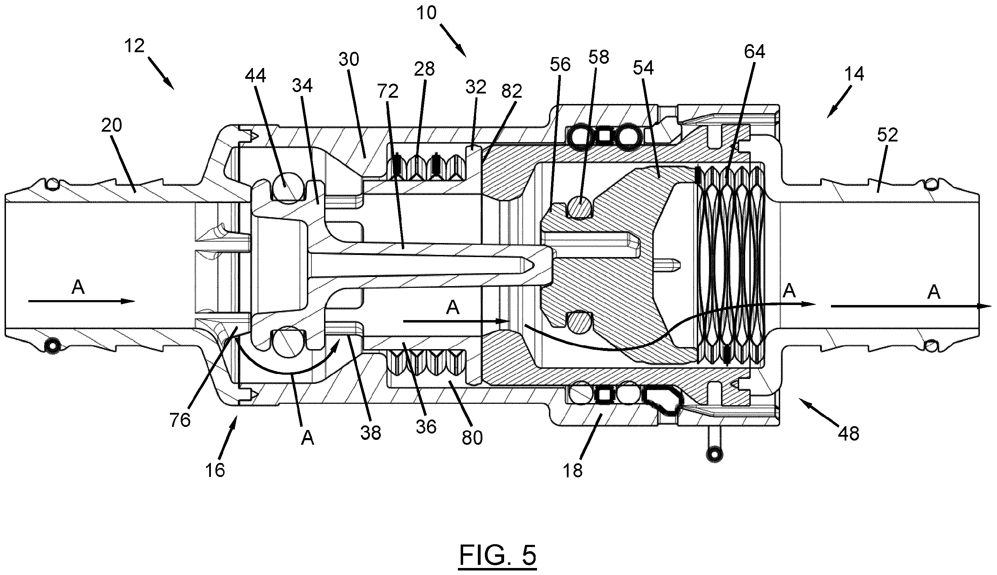

In Figur 3 ist eine Seitenquerschnittsansicht der Steckeinheit 14 dargestellt. Auch hier spannt die Feder 64 das Verschlusselement 54 der Steckeinheit 14 in Richtung seiner Schließstellung vor, das heißt in eine Stellung, in welcher das Dichtungselement 58 derart mit dem röhrenförmigen Abschnitt 50 des Gehäuses 48 der Steckeinheit 14 in Kontakt steht, dass ein Durchtritt von Fluid verhindert werden kann. An einer freien Stirnfläche des ersten zylindrischen Abschnitts 56 des Verschlusselements 54 der Steckeinheit 14 ist eine Bolzen-Aufnahmefläche 74 ausgebildet (siehe die nachfolgende detaillierte Beschreibung hierzu in Bezug auf Figuren 4 und 5).

Figur 4 zeigt die erfindungsgemäße Kopplungseinrichtung 10 in einem teilverbundenen Zustand, nämlich einem Zustand, in welchem die Steckeinheit 14 zwar bereits teilweise in die Aufnahmeeinheit 12 eingeführt worden ist und auch ein äußerer Umfang des röhrenförmigen Abschnitts 50 des Gehäuses 48 der Steckeinheit 14 mit der Dichtungseinrichtung 46 der Aufnahmeeinheit 12 zumindest teilweise in einen abdichtenden Kontakt getreten ist. Jedoch sind in dem teilweise verbundenen Zustand von Figur 4 sowohl das Verschlusselement 34 der Aufnahmeeinheit 12 als auch das Verschlusselement 54 der Steckeinheit 14 noch in ihrer jeweiligen Schließstellung, so dass ein Durchtritt von Fluid durch die Kopplungseinrichtung 10 unterbunden wird. Der zentrale Bolzen 72 ist in Figur 4 bereits mit der Bolzen-Aufnahmefläche 74 der Steckeinheit 14 in Kontakt getreten.

Wird die Steckeinheit 14 nun weiter in die Aufnahmeeinheit 12 hinein verlagert, so wird am Ende dieses Einführens der vollständig verbundene Zustand gemäß Figur 5 erreicht. In Figur 5 sind sowohl das Verschlusselement 34 der Aufnahmeeinheit 12 als auch das Verschlusselement 54 der Steckeinheit 14 in ihrer Freigabestellung angeordnet, so dass Fluid in der Fluidströmungsrichtung, welche durch den Pfeil A angezeigt ist, durch die Kopplungseinrichtung 10 strömen kann.

Obwohl nicht gezeigt, soll für die in den Figuren dargestellte Ausführungsform der erfindungsgemäßen Kopplungseinrichtung 10 angenommen werden, dass eine Federrate der Wellenfeder 64 der Steckeinheit 14 geringer ist als eine Federrate der Wellenfeder 28 der Aufnahmeeinheit 12, so dass bei dem weiteren Einführen der Steckeinheit 14 in die Aufnahmeeinheit 12, nach der in Figur 4 gezeigten Stellung, zunächst die Wellenfeder 64 komprimiert wird und somit das Verschlusselement 54 der Steckeinheit 14 aus seiner Schließstellung in die Freigabestellung gemäß Figur 5 durch die Wirkung des Bolzens 72 verlagert wird. Hat die Wellenfeder 64 ihre maximale Kompression erreicht oder liegt das Verschlusselement 54 der Steckeinheit 14 gegen einen entsprechenden Anschlag an, so verlagert das weitere Einführen der Steckeinheit 14 in die Aufnahmeeinheit 12 das Verschlusselement 34 der Aufnahmeeinheit 12 aus seiner Schließstellung in die Freigabestellung. Erst zu diesem Zeitpunkt wird dem Fluid erlaubt, an dem Dichtungselement 44, welches an dem Verschlusselement 34 der Aufnahmeeinheit 12 angeordnet ist, vorbei und in die Steckeinheit 14 zu strömen.

In seiner Freigabestellung liegt das Verschlusselement 34 der Aufnahmeeinheit 12 gemäß dem ersten Ausführungsbeispiel gegen Stege 76 an, welche von dem Abschlusselement 20 des Gehäuses 16 der Aufnahmeeinheit 12 vorstehen. Durch den Kontakt zwischen dem Verschlusselement 34 der Aufnahmeeinheit 12 und den Stegen 76 wird die Freigabestellung definiert.

Mit Bezug auf die in Figur 5 dargestellte Stellung der Kopplungseinrichtung 10 strömt das Fluid durch eine nicht dargestellte Fluidleitung in die Aufnahmeeinheit 12, das heißt den innerhalb des Abschlusselements 20 des Gehäuses 16 der Aufnahmeeinheit 12 ausgebildeten Fluidströmungskanal, von dort zwischen den Stegen 76 nach radial außen und radial außen um das Dichtungselement 44 und den entsprechenden Abschnitt des Verschlusselements 34 der Aufnahmeeinheit 12 herum (siehe den gekrümmten Pfeil A in Figur 5), dann strömt das Fluid über die Durchbrechungen 38 des Verschlusselements 34 der Aufnahmeeinheit 12 nach radial innen und entlang des zentralen Bolzens 72 von der Aufnahmeeinheit 12 in die Steckeinheit 14. In der Steckeinheit 14 strömt das Fluid radial außen um den ersten zylindrischen Abschnitt 56 und das Dichtungselement 58 des Verschlusselements 54 der Steckeinheit 14 herum, dann durch sektorartige Durchbrechungen 78 (siehe Figur 1) durch das Innere der Wellenfeder 64 und über einen innerhalb des Abschlusselements 52 des Gehäuses 48 der Steckeinheit 14 ausgebildeten Fluidströmungskanal aus der Kopplungseinrichtung 10 in eine (wiederum nicht dargestellte) Fluidleitung.

Wie insbesondere der Figur 5 zu entnehmen ist, ist die Feder 28, in dem in Figur 5 dargestellten vollständig verbundenen Zustand der Kopplungseinrichtung 10, innerhalb eines Aufnahmeraums 80 angeordnet, welcher radial innen durch den zylindrischen, durchbrechungsfreien Abschnitt 36 des Verschlusselements 34 der Aufnahmeeinheit 12, radial außen durch den röhrenförmigen Abschnitt 18 des Gehäuses 16 der Aufnahmeeinheit 12 und in axialer Richtung vorne und hinten von dem Kragen 32 des Verschlusselements 34 der Aufnahmeeinheit 12 und von dem Vorsprung 30 des Gehäuses 16 der Aufnahmeeinheit 12 begrenzt ist. Die Wellenfeder 28 kann somit in der Freigabestellung des Verschlusselements 34 der Aufnahmeeinheit 12 von dem Fluidströmungspfad abgetrennt werden, so dass die unstetige Struktur der Wellenfeder 28 keine Verwirbelungen in der Fluidströmung hervorrufen kann, welche innerhalb der Aufnahmeeinheit 12 auftritt.

Nachzutragen sei noch, dass alternativ oder zusätzlich zu dem Kontaktieren des Bolzens 72 und der Bolzen-Aufnahmefläche 74 auch eine Anlagefläche 82 (siehe Figuren 3 und 5) der Steckeinheit 14, welche in den Figuren beispielhaft an dem Gehäuse 48 der Steckeinheit 14 ausgebildet ist, mit einer Gegenanlagefläche an dem Verschlusselement 34 der Aufnahmeeinheit 12, welche in den Figuren an der der Feder 28 entgegengesetzten Seite des Kragens 32 des Verschlusselements 34 gebildet ist, in Kontakt treten kann, um, auf ein Einführen der Steckeinheit 14 in die Aufnahmeeinheit 12 hin, eine Verlagerung der Verschlusselemente 34 und 54 hervorzurufen.

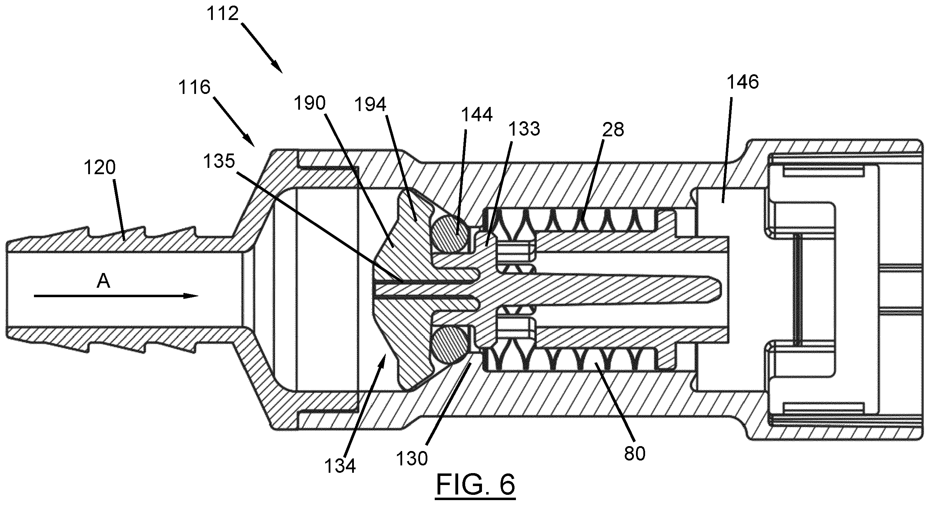

Im Folgenden wird unter Bezugnahme auf Figur 6 ein zweites Ausführungsbeispiel einer erfindungsgemäßen Aufnahmeeinheit 112 beschrieben, welche eine Abwandlung der zuvor beschriebenen Aufnahmeeinheit 12 ist, so dass im weiteren Verlauf nur auf die Unterschiede zum ersten Ausführungsbeispiel näher eingegangen wird und in Bezug auf alle anderen Merkmale und Funktionen auf das erste Ausführungsbeispiel verwiesen wird. Demgemäß können sämtliche Merkmale, Effekte und Vorteile, welche in Bezug auf die erste Ausführungsform der Aufnahmeeinheit 12 (bzw. der zugehörigen Kopplungseinrichtung 10) offenbart sind, gleichermaßen auf die zweite Ausführungsform der Aufnahmeeinheit 112 (bzw. der zugehörigen Kopplungseinrichtung 110) anwendbar sein und umgekehrt.

In Figur 6 ist eine Seitenquerschnittsansicht der Aufnahmeeinheit 112 des zweiten Ausführungsbeispiels in einem zusammengebauten Zustand dargestellt, wobei ein Durchfluss von Fluid in der gegebenen Darstellung versperrt ist. Das Abschlusselement 120 der Aufnahmeeinheit 112 weist hier im Vergleich zu der Aufnahmeeinheit 12 des ersten Ausführungsbeispiels an dessen erstem Ende keine Nut und kein Dichtungselement auf, welche jedoch optional vorgesehen sein können. Analog zu der Dichtungseinrichtung 46 des ersten Ausführungsbeispiels ist auch in der Aufnahmeeinheit 112 eine Dichtungseinrichtung 146 vorgesehen (O-Ringe und Abstandshalter hier nicht dargestellt), welche die Aufnahmeeinheit 112 gegenüber der Steckeinheit 114 nach außen hin abdichtet.

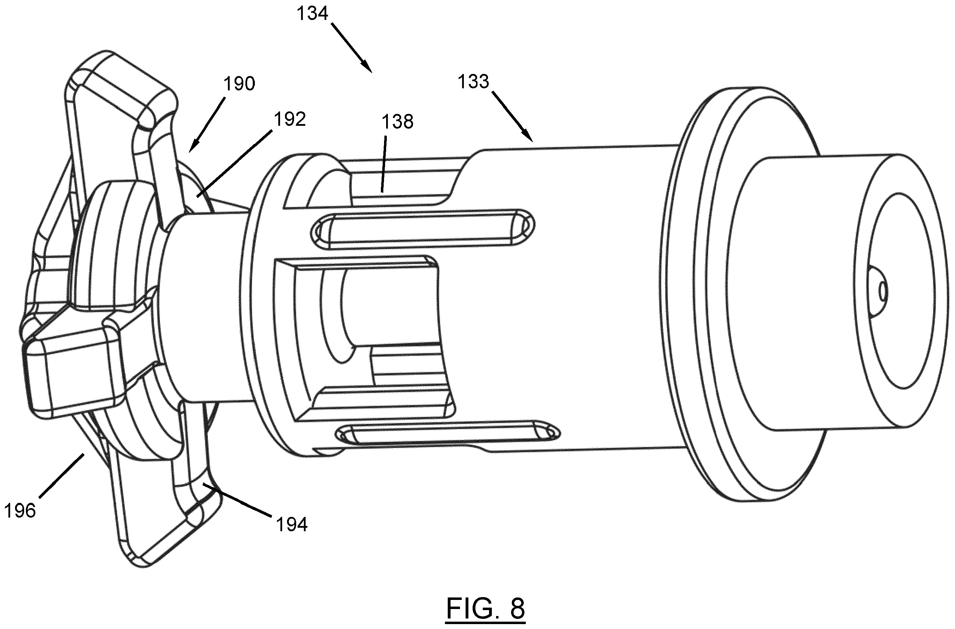

Das Verschlusselement 134 der Aufnahmeeinheit 112 unterscheidet sich von dem Verschlusselement 34 des ersten Ausführungsbeispiels insbesondere durch seinen mehrteiligen Aufbau. Hier umfasst das Verschlusselement 134 parallel zur Strömungsrichtung A angeordnete Innen- und Außengewinde, welche zusammen mit dem Bezugszeichen 135 bezeichnet sind, über welche ein Endabschnitt 190 des Verschlusselements 134 und ein Unterelement 133 des Verschlusselements 134 aneinander angebracht sind. Im Zuge der Montage des Verschlusselements 134 können alternativ oder zusätzlich der Endabschnitt 190 sowie das Unterelement 133 auch miteinander verbunden werden, beispielsweise durch Verschweißen, Vernieten, Verstemmen, um eine vollständig abgedichtete Verbindung zwischen Endabschnitt 190 und Unterelement 133 zu gewährleisten. Der Endabschnitt 190 weist sich nach radial außen erstreckenden Stege 194 auf (s. Figur 8), deren freien Enden nahe zu einer inneren Oberfläche des Gehäuses 116 angeordnet sind oder diese kontaktieren. Bevorzugt weist der Endabschnitt 190 wenigstens drei Stege 194, gemäß der hier dargestellten zweiten Ausführungsform vier Stege 194, auf. An den freien Enden der Stege 194 sind konische Flächen angeordnet, welche in der Schließstellung des Verschlusselements 134 an dem Gehäuse 116 anliegen. Hierdurch kann vermieden werden, dass das Verschlusselement 134 über die Schließstellung hinaus verlagert werden kann bzw. ein Dichtungselement 144 beschädigt oder aus seiner Aufnahme heraus verlagert wird.

In der in Figur 6 dargestellten Schließstellung des Verschlusselements 134 bewirkt das Dichtungselement 144, welches zwischen dem Endabschnitt 190 sowie dem Unterelement 133 aufgenommen ist, eine fluidische Abdichtung zwischen einem Strömungsraum stromaufwärts des Verschlusselements 134 und einem Strömungsraum stromabwärts des Verschlusselements 134. Die Verwendung des Endabschnitts 190 hat den weiteren Vorteil, dass die Stege 194 des Endabschnitts 190 den O-Ring 144 gegen eine Verlagerung aus seiner Aufnahme sichern.

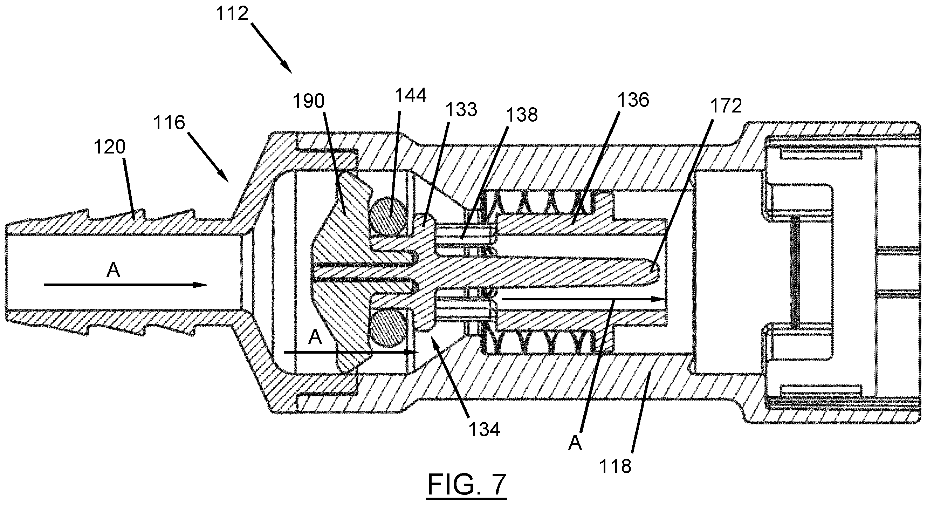

Analog zu der in Figur 5 beschriebenen Freigabestellung der Aufnahmeeinheit 12 wird in Figur 7 das Verschlusselement 134 der Aufnahmeeinheit 112 in der Freigabestellung dargestellt, wodurch eine Fluidströmung entlang der Strömungsrichtung A über den gesamten Verlauf der Aufnahmeeinheit 112 ermöglicht wird. Im Gegensatz zu dem ersten Ausführungsbeispiel sind in dem Abschlusselement 120 des Gehäuses 116 keine Stege 76 vorgesehen, da das Fluid durch Öffnungen 196 (s. Fig. 8; in Figur 7 nicht dargestellt) des Endabschnitts 190 geleitet wird. Anschließend strömt das Fluid gemäß dem weiteren Verlauf eines röhrenförmigen Abschnitts 118 der Aufnahmeeinheit 112 radial außen um das Dichtungselement 144 sowie um einen unmittelbar angrenzenden Teil des Unterelements 133 herum. Über Durchbrechungen 138 gelangt das Fluid nach radial innen und strömt anschließend innerhalb eines zylindrischen Abschnitts 136 des Verschlusselements 134 an einem zentralen Bolzen 172 vorbei. Durch die axiale Anordnung des Bolzens 172 wird die zuvor radial verlaufende Strömung derart in eine axial verlaufende Strömung überführt, dass ungewünschte Verwirbelungen oder Staueffekte reduziert oder sogar vermieden werden. Der weitere Verlauf des Fluids erfolgt innerhalb einer hier nicht dargestellten, weiter unten beschriebenen Steckeinheit 114.

Figur 8 zeigt eine perspektivische Ansicht des Verschlusselements 134, umfassend den Endabschnitt 190 sowie das Unterelement 133, wie bereits weiter oben erwähnt. Dabei wird ersichtlich, dass der Endabschnitt 190 einen tellerförmigen Basisabschnitt 192 und mehrere, hier vier, von dem Basisabschnitt 192 radial abstehende Stege 194 umfasst. Zwischen den einzelnen abstehenden Stegen 194 sind die Durchbrechungen 196 vorgesehen, durch welche Fluid in der Freigabestellung des Verschlusselements 134 passieren kann. Ferner geht aus Figur 8 die Anordnung der fensterartigen Durchbrechungen 138 des Unterelements 133 hervor, welche dazu eingerichtet sind, eine fluidische Verbindung zwischen einem Äußeren und einem Inneren des Verschlusselements 134 herzustellen.

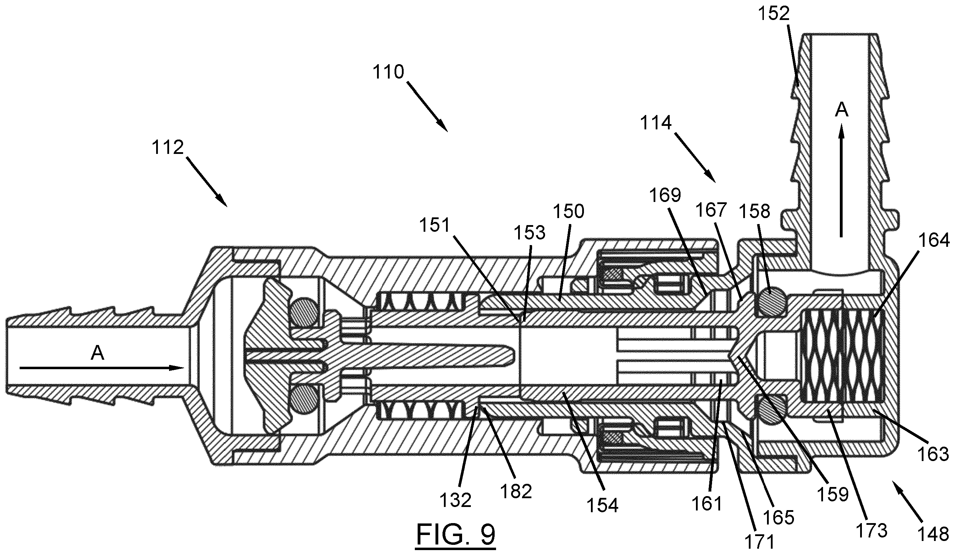

Ein zweites Ausführungsbeispiel einer erfindungsgemäßen Kopplungseinrichtung 110 wird in Figur 9 in einer Seitenquerschnittsansicht dargestellt. Im Unterschied zu der Kopplungseinrichtung 10 des ersten Ausführungsbeispiels weist die Kopplungseinrichtung 110 die zuvor beschriebene Aufnahmeeinheit 112 sowie eine Steckeinheit 114 auf, in welcher analog zu der Steckeinheit 14 ein Verschlusselement 154 aufgenommen ist. Das Gehäuse 148 der Steckeinheit 114 ist hier zweiteilig ausgebildet, umfassend einen röhrenförmigen Abschnitt 150 und ein weiteres Abschlusselement 152, das analog zu dem weiteren Abschlusselement 52 mit einer nicht dargestellten Fluidleitung verbunden werden und hierfür optional Dichtungselemente aufweisen kann, wobei ein Fluidausgang (oder Fluideingang bei umgekehrter Strömungsrichtung) des Abschlusselements 152 gewinkelt, hier rechtwinklig, zur Längserstreckung der Kopplungseinrichtung 110 angeordnet ist. Es sei der Vollständigkeit halber erwähnt, dass, obwohl die Steckeinheit 114 in Figur 9 gewinkelt dargestellt ist, dies nicht zwangsweise der Fall sein muss. Der röhrenförmige Abschnitt 150 und das weitere Abschlusselement 152 sind fluiddicht miteinander verbunden.

Innerhalb der Steckeinheit 114 ist eine Wellenfeder 164 aufgenommen, welche das Verschlusselement 154 der Steckeinheit 114 in seine Schließstellung vorbelastet. Die Wellenfeder 164 ist in einer Federaufnahme 163 gehaltert, welche integral mit dem weiteren Abschlusselement 152 ausgebildet ist und in dessen Inneres ringförmig vorsteht. Bei der Verlagerung des Verschlusselements 154 aus seiner Freigabestellung in seine Schließstellung tritt ein Dichtungselement 158, welches radial außen an dem Verschlusselement 154 der Steckeinheit 114 aufgenommen ist, zunächst mit einer sich verjüngenden Anlagefläche 165 in Kontakt, wodurch das Dichtungselement 158 nach radial innen komprimiert wird. Aufgrund der Wirkung der Wellenfeder 164 wird das Verschlusselement 154 solange weiter verlagert, bis eine Anschlagsfläche 167 des Verschlusselements 154 gegen eine Gegenanschlagsfläche 169 anschlägt, welche an dem Gehäuse 148 der Steckeinheit 114 ausgebildet ist. Durch den Kontakt der Anschlagsfläche 167 und der Gegenanschlagsfläche 169 ist somit die Schließstellung des Verschlusselements 154 definiert. In dieser Schließstellung liegt das Dichtungselement 158 gegen eine zylindrische Dichtfläche 171 an, wobei die elastische Rückstellkraft des Dichtungselements 158, welche im Wesentlichen orthogonal zu der Dichtfläche 171 wirkt, die Dichtungswirkung unterstützt. Eine derartige zylindrische Dichtfläche kann selbstverständlich analog an der Aufnahmeeinheit vorgesehen sein, welche mit dem Dichtungselement 144 zusammenwirkt.

Im Folgenden soll nun der Verbindungsvorgang der Kopplungseinrichtung 110 näher beschrieben werden. Wird die Steckeinheit 114 in die Aufnahmeeinheit 112 eingeführt, so kontaktiert zuerst eine Anlagefläche 151 des Verschlusselements 134 der Aufnahmeeinheit 112 eine Gegenanlagefläche 153 des Verschlusselements 154 der Steckeinheit 114. Beim weiteren Einführen der Steckeinheit 114 in die Aufnahmeeinheit 112 wird, je nach Auslegung der Federkräfte der Wellendfedern 28, 164, wenigstens eines der beiden Verschlusselemente 134, 154 aus seiner Schließstellung in Richtung seiner Freigabestellung verlagert. In dem in Figur 9 darstellten Beispiel, ist die Federkraft der Wellenfeder 164 geringer als die Federkraft der Wellenfeder 28, so dass das als Erstes das Verschlusselement 154 der Steckeinheit 114 aus seiner Schließstellung in seine Freigabestellung verlagert wird. Anschließend kontaktiert eine Anlagefläche 132 des Verschlusselements 134 der Aufnahmeeinheit 112 eine Gegenanlagefläche 182 des Gehäuses 148 der Steckeinheit 114, wodurch auch das Verschlusselement 134 aus seiner Schließstellung in Richtung seiner Freigabestellung verlagert wird.

Strömt nun ein Fluid von der in Figur 9 links dargestellten Aufnahmeeinheit 112 kommend entlang in die Steckeinheit 114 ein, so wird das Fluid durch einen keilförmigen Boden159 nach radial außen abgelenkt und gelangt anschließend durch Öffnungen 161 in das Abschlusselement 152 der Steckeinheit 114. In der Freigabestellung des Verschlusselements 154 kontaktiert ein ringförmiger Federaufnahmeabschnitt 173 des Verschlusselements 154, in welchem dasjenige freie Ende der Wellenfeder 164 aufgenommen ist, welches nicht in der Federaufnahme 163 aufgenommen ist, die Federaufnahme 163 oder ist zumindest diesem benachbart angeordnet, wodurch die Freigabestellung des Verschlusselements 154 definiert wird. Durch den Kontakt bzw. das Naheliegen der beiden ringförmigen Teile, nämlich Federaufnahme 163 und Federaufnahmeabschnitt 173, wird die Wellenfeder 164 außer Kontakt mit dem vorbeiströmenden Fluid genommen, so dass dadurch, dass das Fluid nicht in Kontakt mit der Wellenfeder 164 tritt, Verwirbelungen in diesem Bereich der Steckeinheit 114 minimiert werden und an der Wellenfeder 164 keine Fluidablagerungen auftreten können.

Das Verschlusselement 154 ist an seinem in Figur 9 links darstellten freien Ende über eine radiale Verdickung innerhalb des röhrenförmigen Abschnitts 150 des Gehäuses 148 geführt.

Radial außen an dem Verschlusselement 154 der Steckeinheit 114 ist eine Rastvorrichtung 175 ausgebildet, welche dazu eingerichtet ist, an der Aufnahmeeinheit 112 zu verrasten, um so eine ungewünschte Entkopplung zwischen Aufnahmeeinheit 112 und Steckeinheit 114 zu verhindern.

## Patentansprüche

1. Kopplungseinrichtung (10, 110) für Fluidleitungen, umfassend eine Aufnahmeeinheit (12, 112) und eine Steckeinheit (14, 114), wobei die Aufnahmeeinheit (12, 112) dazu eingerichtet ist, an einem ersten Ende (22) mit einer, nicht zu der Aufnahmeeinheit (12, 112) gehörenden, Fluidleitung verbunden zu werden, und welche in ihrem Inneren einen Fluidströmungskanal definiert, wobei die Aufnahmeeinheit (12, 112) ein Verschlusselement (34, 134) umfasst, welches dazu eingerichtet ist, in einer Schließstellung den Fluidströmungskanal der Aufnahmeeinheit (12, 112) zwischen dem ersten Ende (22) und einem, dem ersten Ende (22) in Bezug auf eine Hauptströmungsrichtung entlang des Fluidströmungskanals entgegengesetzten, zweiten Ende der Aufnahmeeinheit (12, 112) fluidisch abzudichten, wobei das Verschlusselement (34, 134) zwischen der Schließstellung und einer Freigabestellung verlagerbar ist, wobei das Verschlusselement (34, 134) unter Verwendung eines Federelements (28) in die Schließstellung vorbelastet ist, wobei das Verschlusselement (34, 134) einen im Wesentlichen zylindrischen Abschnitt (36, 136) umfasst, welcher durchbrechungsfrei ausgebildet ist, wobei das gesamte Federelement (28), in der Freigabestellung des Verschlusselements (34, 134), innerhalb eines Bereichs (80) angeordnet ist, welcher entlang seiner gesamten longitudinalen Erstreckung, in einer radialen Richtung des zylindrischen Abschnitts (36, 136) betrachtet, vollständig von dem zylindrischen Abschnitt (36, 136) überlappt ist, wobei das Verschlusselement (34, 134) ferner einen mit Durchbrechungen (38, 138) versehenen Teilabschnitt (40) umfasst, wobei die Durchbrechungen (38, 138) des Teilabschnitts (40) als fensterartige Öffnungen (38, 138) ausgebildet sind, welche einen Innenraum des Verschlusselements (34, 134) mit einer Außenseite des Verschlusselements (34, 134) fluidisch verbinden,
wobei die Steckeinheit (14, 114) dazu eingerichtet ist, an einem ersten Ende mit einer, nicht zu der Steckeinheit (14, 114) gehörenden, weiteren Fluidleitung verbunden zu werden, und welche in ihrem Inneren einen Fluidströmungskanal definiert, wobei die Steckeinheit (14, 114) eine Anlagefläche (74, 82; 153, 182) aufweist, welche dazu eingerichtet ist, beim Einführen der Steckeinheit (14, 114) in die Aufnahmeeinheit (12, 112) mit einer entsprechenden Gegenanlagefläche (72, 32; 151, 132) des Verschlusselements (34, 134) der Aufnahmeeinheit (12, 112) in Kontakt zu treten, so dass, auf ein Fortsetzen des Einführens der Steckeinheit (14, 114) in die Aufnahmeeinheit (12, 112) hin, das Verschlusselement (34, 134) der Aufnahmeeinheit (12) aus seiner Schließstellung in Richtung der Freigabestellung verlagert wird, wobei an der Aufnahmeeinheit (12, 112) und/oder der Steckeinheit (14, 114) eine Dichtungseinrichtung (46) angeordnet ist, welche dazu eingerichtet ist, derart zwischen der Aufnahmeeinheit (12, 112) und der Steckeinheit (14, 114) zu wirken, dass der Fluidströmungskanal der Aufnahmeeinheit (12, 112) und/oder der Steckeinheit (14, 114) zu einer Außenseite der Kopplungseinrichtung (10, 110) fluidisch abgedichtet ist, wobei die Dichtungseinrichtung (46) derart angeordnet ist, dass eine fluidische Abdichtung zwischen der Aufnahmeeinheit (12, 112) und der Steckeinheit (14, 114) hergestellt ist, bevor die Anlagefläche (74, 82; 153, 182) der Steckeinheit (14, 114) mit der Gegenanlagefläche (72, 32; 151, 132) des Verschlusselements in Kontakt tritt,
wobei das Verschlusselement (34) der Aufnahmeeinheit (12) einen zentralen Bolzen (72) aufweist, welcher ein freies Ende aufweist, welches sich in Richtung des zweiten Endes der Aufnahmeeinheit (12) erstreckt, und welcher dazu eingerichtet ist, auf ein Einführen der Steckeinheit (14) in die Aufnahmeeinheit (12) hin, insbesondere mit seinem freien Ende, gegen eine an dem Verschlusselement der Steckeinheit (14) ausgebildete Bolzen-Aufnahmefläche (74) anzuliegen, so dass, auf ein Fortsetzen des Einführens der Steckeinheit (14) in die Aufnahmeeinheit (12) hin, wobei auch die Steckeinheit (14, 114) ein Verschlusselement (54, 154) umfasst,das Verschlusselement (54) der Steckeinheit (14) bzw. das Verschlusselement (34) der Aufnahmeeinheit (12) aus seiner Schließstellung in Richtung der Freigabestellung verlagert wird,
**dadurch gekennzeichnet, dass** die Gegenanlagefläche (32; 132) des Verschlusselements (34, 134) der Aufnahmeeinheit (12, 112) als von dem Verschlusselement der Aufnahmeeinheit (12, 112) in radialer Richtung abstehender Kragen (32, 132) ausgebildet ist.

2. Kopplungseinrichtung (10) nach Anspruch 1,
**dadurch gekennzeichnet, dass** das Verschlusselement (54, 154) der Steckeinheit (14, 114) dazu eingerichtet ist, in einer Schließstellung den Fluidströmungskanal der Steckeinheit (14, 114) zwischen einem, dem ersten Ende in Bezug auf eine Hauptströmungsrichtung entlang des Fluidströmungskanals entgegengesetzten, zweiten Ende der Steckeinheit (14, 114) und dem ersten Ende fluidisch abzudichten, wobei das Verschlusselement (54, 154) der Steckeinheit (14, 114) zwischen der Schließstellung und einer Freigabestellung verlagerbar ist, wobei das Verschlusselement (54, 154) der Steckeinheit (14, 114) unter Verwendung eines Federelements (64, 164) in die Schließstellung vorbelastet ist.

3. Kopplungseinrichtung (10) nach Anspruch 1 oder 2,
**dadurch gekennzeichnet, dass** das Verschlusselement (54) der Steckeinheit (14) in einer Richtung von dem zweiten Ende der Steckeinheit (14) zu erstem Ende der Steckeinheit (14) einen ansteigenden Durchmesser aufweist.

4. Kopplungseinrichtung (10) nach einem der Ansprüche 1 bis 3,
**dadurch gekennzeichnet, dass** eine Federkraft des Federelements (64, 164), welches auf das Verschlusselement (54, 154) der Steckeinheit (14, 114) einwirkt, geringer, insbesondere deutlich geringer, ist als eine Federkraft des Federelements (28), welches auf das Verschlusselement (34, 134) der Aufnahmeeinheit (12, 112) einwirkt, so dass, auf ein Einführen der Steckeinheit (14, 114) in die Aufnahmeeinheit (12, 112) hin, zuerst das Verschlusselement (54, 154) der Steckeinheit (14, 114) aus seiner Schließstellung in seine Freigabestellung verlagert wird und anschließend, auf ein Fortsetzen des Einführens der Steckeinheit (14, 114) in die Aufnahmeeinheit (12, 112) hin, das Verschlusselement (34, 134) der Aufnahmeeinheit (12, 112) aus seiner Schließstellung in seine Freigabestellung verlagert wird.

5. Kopplungseinrichtung (10) nach einem der vorhergehenden Ansprüche,
**dadurch gekennzeichnet, dass** das Federelement (28) eine Wellenfeder ist.

6. Kopplungseinrichtung (10) nach einem der vorhergehenden Ansprüche,
**dadurch gekennzeichnet, dass** das Federelement (28) radial außerhalb des zylindrischen Abschnitts (36, 136) angeordnet ist.

7. Kopplungseinrichtung (10) nach einem der vorhergehenden Ansprüche,
**dadurch gekennzeichnet, dass** die Durchbrechungen (38. 138) des Teilabschnitts (40) als vier fensterartige Öffnungen (38, 138) ausgebildet sind.

8. Kopplungseinrichtung (10) nach einem der vorhergehenden Ansprüche,
**dadurch gekennzeichnet, dass** die Aufnahmeeinheit (12, 112) ein Gehäuse (16, 116) aufweist, in welchem das Verschlusselement (34, 134) aufgenommen ist, wobei das Gehäuse (16, 116) einen sich nach radial innen erstreckenden Vorsprung (30, 130) aufweist, welcher dazu eingerichtet ist, mit dem Verschlusselement (34, 134), insbesondere einem an dem Verschlusselement (34, 134) angeordneten Dichtungselement (44, 144), in der Schließstellung des Verschlusselements (34, 134) in Kontakt zu treten.

9. Kopplungseinrichtung (10) nach Anspruch 8,
**dadurch gekennzeichnet, dass** der Vorsprung (30, 130) mit einer schrägen Flanke versehen ist, so dass sich durch den Vorsprung (30, 130) in einer Richtung von der Freigabestellung zu der Schließstellung des Verschlusselements (34, 134) ein allmählich verringernder Querschnitt des Innenraums des Gehäuses (16, 116) ergibt.

10. Kopplungseinrichtung (10) nach Anspruch 8 oder 9,
**dadurch gekennzeichnet, dass** das Gehäuse (16, 116) der Aufnahmeeinheit (12, 112) mehrteilig, insbesondere zweiteilig, ausgebildet ist.

11. Kopplungseinrichtung (10) nach Anspruch 10,
**dadurch gekennzeichnet, dass** ein erster Gehäuseteil (20, 120), welcher das erste Ende (22) umfasst, mit einem zweiten Gehäuseteil (18), welcher das zweite Ende umfasst, fluiddicht verbunden ist, insbesondere unter Verwendung eines Rotationsschweißverfahrens oder eines Laserschweißverfahrens.

12. Kopplungseinrichtung (10) nach einem der Ansprüche 8 bis 11,
**dadurch gekennzeichnet, dass** an dem Gehäuse (16) wenigstens ein vorstehender Steg (76) angeordnet ist, welcher dazu eingerichtet ist, in Anlage gegen das Verschlusselement (34) die Freigabestellung des Verschlusselements (34) zu definieren.

## Claims

1. Coupling device (10, 110) for fluid lines, comprising a receiving unit (12, 112) and a plug-in unit (14, 114), wherein the receiving unit (12, 112) is designed to be connected at a first end (22) to a fluid line not belonging to the receiving unit (12, 112), and which defines a fluid flow channel in its interior, wherein the receiving unit (12, 112) comprises a closure element (34, 134) which, in a closed position, is designed to fluidically seal the fluid flow channel of the receiving unit (12, 112) between the first end (22) and a second end of the receiving unit (12, 112) opposite the first end (22) with respect to a main flow direction along the fluid flow channel, wherein the closure element (34, 134) is displaceable between the closed position and a release position, wherein the closure element (34, 134) is preloaded into the closed position using a spring element (28), wherein the closure element (34, 134) comprises a substantially cylindrical section (36, 136) which is formed free of perforations, wherein the entire spring element (28), in the release position of the closure element (34, 134), is arranged within a region (80) which, along its entire longitudinal extent, viewed in a radial direction of the cylindrical section (36, 136), is completely overlapped by the cylindrical section (36, 136), wherein the closure element (34, 134) further comprises a partial section (40) provided with perforations (38, 138), wherein the perforations (38, 138) of the partial section (40) are designed as window-like openings (38, 138) which fluidically connect an interior of the closure element (34, 134) to an exterior of the closure element (34, 134), wherein the plug-in unit (14, 114) is designed to be connected at a first end to a further fluid line not belonging to the plug-in unit (14, 114), and which defines a fluid flow channel in its interior, wherein the plug-in unit (14, 114) has a contact surface (74, 82; 153, 182) which is designed to come into contact with a corresponding counter-contact surface (72, 32; 151, 132) of the closure element (34, 134) of the receiving unit (12, 112) so that, as the plug-in unit (14, 114) is progressively inserted into the receiving unit (12, 112), the closure element (34, 134) of the receiving unit (12) is displaced from its closed position in the direction of the release position, wherein a sealing device (46) is arranged on the receiving unit (12, 112) and/or on the plug-in unit (14, 114), said sealing device being designed to act between the receiving unit (12, 112) and the plug-in unit (14, 114) in such a way that the fluid flow channel of the receiving unit (12, 112) and/or the plug-in unit (14, 114) is fluidically sealed to an outside of the coupling device (10, 110), wherein the sealing device (46) is arranged such that a fluidic seal is established between the receiving unit (12, 112) and the plug-in unit (14, 114) before the contact surface (74, 82; 153, 182) of the plug-in unit (14, 114) comes into contact with the counter-contact surface (72, 32; 151, 132) of the closure element,
wherein the closure element (34) of the receiving unit (12) has a central bolt (72) which has a free end that extends in the direction of the second end of the receiving unit (12) and which is designed, on insertion of the plug-in unit (14) into the receiving unit (12), in particular with its free end, to bear against a bolt-receiving surface (74) formed on the closure element of the plug-in unit (14), so that on progressively inserting the plug-in unit (14) into the receiving unit (12), wherein the plug-in unit (14, 114) also comprises a closure element (54, 154), the closure element (54) of the plug-in unit (14) or the closure element (34) of the receiving unit (12) is displaced from its closed position toward the release position,
**characterised in that** the counter-contact surface (32; 132) of the closure element (34, 134) of the receiving unit (12, 112) is designed as a collar (32, 132) projecting radially from the closure element of the receiving unit (12, 112).

2. Coupling device (10) according to claim 1,
**characterised in that** the closure element (54, 154) of the plug-in unit (14, 114) is designed, when in a closed position, to fluidically seal the fluid flow channel of the plug-in unit (14, 114) between a second end of the plug-in unit (14, 114) opposite the first end with respect to a main flow direction along the fluid flow channel and the first end, wherein the closure element (54, 154) of the plug-in unit (14, 114) is displaceable between the closed position and a release position, wherein the closure element (54, 154) of the plug-in unit (14, 114) is preloaded into the closed position using a spring element (64, 164).

3. Coupling device (10) according to claim 1 or 2,
**characterised in that** the closure element (54) of the plug-in unit (14) has an increasing diameter in a direction from the second end of the plug-in unit (14) to the first end of the plug-in unit (14).

4. Coupling device (10) according to one of claims 1 to 3,
**characterised in that** a spring force of the spring element (64, 164) that acts on the closure element (54, 154) of the plug-in unit (14, 114) is less, in particular significantly less, than a spring force of the spring element (28) that acts on the closure element (34, 134) of the receiving unit (12, 112), so that on inserting the plug-in unit (14, 114) into the receiving unit (12, 112), the closure element (54, 154) of the plug-in unit (14, 114) is first of all displaced from its closed position to its release position and subsequently, on progressively inserting the plug-in unit (14, 114) into the receiving unit (12, 112), the closure element (34, 134) of the receiving unit (12, 112) is displaced from its closed position to its release position.

5. Coupling device (10) according to one of the preceding claims,
**characterised in that** the spring element (28) is a coiled spring.

6. Coupling device (10) according to one of the preceding claims,
**characterised in that** the spring element (28) is arranged radially outside the cylindrical section (36, 136).

7. Coupling device (10) according to one of the preceding claims,
**characterised in that** the perforations (38, 138) of the partial section (40) are designed as four window-like openings (38, 138).

8. Coupling device (10) according to one of the preceding claims,
**characterised in that** the receiving unit (12, 112) has a housing (16, 116) in which the closure element (34, 134) is accommodated, wherein the housing (16, 116) has a radially inwardly extending projection (30, 130) which is designed to come into contact with the closure element (34, 134), in particular with a sealing element (44, 144) arranged on the closure element (34, 134), in the closed position of said closure element (34, 134).

9. Coupling device (10) according to claim 8,
**characterised in that** the projection (30, 130) is provided with a slanting flank, so that the projection (30, 130) results in a gradually decreasing cross-section of the interior of the housing (16, 116) in a direction from the release position to the closed position of the closure element (34, 134).

10. Coupling device (10) according to claim 8 or 9,
**characterised in that** the housing (16, 116) of the receiving unit (12, 112) is formed in multiple parts, in particular in two parts.

11. Coupling device (10) according to claim 10,
**characterised in that** a first housing part (20, 120), which comprises the first end (22), is fluidically tightly connected to a second housing part (18), which comprises the second end, in particular using a spin welding process or a laser welding process.

12. Coupling device (10) according to one of claims 8 to 11,
**characterised in that** at least one protruding stud (76) is arranged on the housing (16), which is designed to define the release position of the closure element (34) when abutting against the closure element (34).

## Revendications

1. Dispositif d'accouplement (10, 110) pour conduites de fluide, comprenant une unité de réception (12, 112) et une unité enfichable (14, 114), où l'unité de réception (12, 112) est conçue pour être reliée à une première extrémité (22) à une conduite de fluide n'appartenant pas à l'unité de réception (12, 112), et qui définit dans son intérieur un canal d'écoulement de fluide, où l'unité de réception (12, 112) comprend un élément de fermeture (34, 134) qui est conçu pour fermer de manière étanche fluidiquement le canal d'écoulement de fluide de l'unité de réception (12, 112) dans une position fermée entre la première extrémité (22) et une deuxième extrémité de l'unité de réception (12, 112) opposée à la première extrémité (22) par rapport à une direction d'écoulement principale le long du canal d'écoulement de fluide, où l'élément de fermeture (34, 134) peut être déplacé entre la position fermée et une position de libération, où l'élément de fermeture (34, 134) est préchargé dans la position fermée à l'aide d'un élément à ressort (28), où l'élément de fermeture (34, 134) comprend une section sensiblement cylindrique (36, 136) qui est agencée pour être exempte d'évidements, où l'ensemble de l'élément à ressort (28), dans la position de libération de l'élément de fermeture (34, 134), est disposé à l'intérieur d'un domaine (80) qui est entièrement recouvert par la section cylindrique (36, 136) sur toute son étendue longitudinale, vu dans une direction radiale de la section cylindrique (36, 136), où l'élément de fermeture (34, 134) comprend en outre une section partielle (40) munie d'évidements (38, 138), où les évidements (38, 138) de la section partielle (40) sont agencés sous forme d'ouvertures (38, 138) en forme de fenêtre qui relient fluidiquement un intérieur de l'élément de fermeture (34, 134) à un extérieur de l'élément de fermeture (34, 134),
où l'unité enfichable (14, 114) est conçue pour être reliée à une première extrémité à une autre conduite de fluide qui n'appartient pas à l'unité enfichable (14, 114), et qui définit dans son intérieur un canal d'écoulement de fluide, où l'unité enfichable (14, 114) présente une surface de contact (74, 82; 153, 182) qui est conçue pour entrer en contact avec une contre-surface de contact (72, 32; 151, 132) correspondante de l'élément de fermeture (34, 134) de l'unité de réception (12, 112) lors de l'insertion de l'unité enfichable (14, 114) dans l'unité de réception (12, 112), de sorte que, lors d'une poursuite de l'insertion de l'unité enfichable (14, 114) dans l'unité de réception (12, 112), l'élément de fermeture (34, 134) de l'unité de réception (12) est déplacé de sa position fermée en direction de la position de libération, où un dispositif d'étanchéité (46) est disposé sur l'unité de réception (12, 112) et/ou l'unité enfichable (14, 114), qui est conçu pour agir entre l'unité de réception (12, 112) et l'unité enfichable (14, 114) de telle est sorte que le canal d'écoulement de fluide de l'unité de réception (12, 112) et/ou de l'unité enfichable (14, 114) est fermé de manière étanche fluidiquement par rapport à un côté extérieur du dispositif d'accouplement (10, 110), où le dispositif d'étanchéité (46) est agencé de telle sorte qu'une étanchéité fluidique est réalisée entre l'unité de réception (12, 112) et l'unité enfichable (14, 114) avant que la surface de contact (74, 82; 153, 182) de l'unité enfichable (14, 114) entre en contact avec la contre-surface de contact (72, 32; 151, 132) de l'élément de fermeture,
où l'élément de fermeture (34) de l'unité de réception (12) présente un boulon central (72) qui présente une extrémité libre qui s'étend en direction de la deuxième extrémité de l'unité de réception (12) et qui est conçu pour s'appuyer, lors d'une insertion de l'unité enfichable (14) dans l'unité de réception (12), en particulier avec son extrémité libre, contre une surface de réception de boulon (74) formée sur l'élément de fermeture de l'unité enfichable (14), de sorte que, lors d'une poursuite de l'insertion de l'unité enfichable (14) dans l'unité de réception (12), où l'unité enfichable (14, 114) comprend également un élément de fermeture (54, 154), l'élément de fermeture (54) de l'unité enfichable (14) ou l'élément de fermeture (34) de l'unité de réception (12) est déplacé de sa position fermée en direction de la position de libération,
**caractérisé en ce que** la contre-surface de contact (32; 132) de l'élément de fermeture (34, 134) de l'unité de réception (12, 112) est agencée comme une collerette (32, 132) dépassant en direction radiale de l'élément de fermeture de l'unité de réception (12, 112).

2. Dispositif d'accouplement (10) selon la revendication 1,
**caractérisé en ce que** l'élément de fermeture (54, 154) de l'unité enfichable (14, 114) est conçu pour fermer de manière étanche fluidiquement le canal d'écoulement de fluide de l'unité enfichable (14, 114) dans une position fermée entre une deuxième extrémité de l'unité enfichable (14, 114) opposée à la première extrémité par rapport à une direction d'écoulement principale le long du canal d'écoulement de fluide et la première extrémité, où l'élément de fermeture (54, 154) de l'unité enfichable (14, 114) peut être déplacé entre la position fermée et une position de libération, où l'élément de fermeture (54, 154) de l'unité enfichable (14, 114) est préchargé dans la position fermée à l'aide d'un élément à ressort (64, 164).

3. Dispositif d'accouplement (10) selon la revendication 1 ou 2,
**caractérisé en ce que** l'élément de fermeture (54) de l'unité enfichable (14) présente un diamètre croissant dans une direction de la deuxième extrémité de l'unité enfichable (14) à la première extrémité de l'unité enfichable (14).

4. Dispositif d'accouplement (10) selon l'une des revendications 1 à 3,
**caractérisé en ce qu'**une force de ressort de l'élément à ressort (64, 164), qui agit sur l'élément de fermeture (54, 154) de l'unité enfichable (14, 114), est inférieure, en particulier nettement inférieure, à une force de ressort de l'élément à ressort (28), qui agit sur l'élément de fermeture (34, 134) de l'unité de réception (12, 112), de sorte que, lors d'une insertion de l'unité enfichable (14, 114) dans l'unité de réception (12, 112), l'élément de fermeture (54, 154) de l'unité enfichable (14, 114) est d'abord déplacé de sa position fermée dans sa position de libération, puis, lors d'une poursuite de l'insertion de l'unité enfichable (14, 114) dans l'unité de réception (12, 112), l'élément de fermeture (34, 134) de l'unité de réception (12, 112) est déplacé de sa position fermée dans sa position de libération.

5. Dispositif d'accouplement (10) selon l'une des revendications précédentes,
**caractérisé en ce que** l'élément à ressort (28) est un ressort ondulé.

6. Dispositif d'accouplement (10) selon l'une des revendications précédentes,
**caractérisé en ce que** l'élément à ressort (28) est disposé radialement à l'extérieur de la section cylindrique (36, 136).

7. Dispositif d'accouplement (10) selon l'une des revendications précédentes,
**caractérisé en ce que** les évidements (38, 138) de la section partielle (40) sont agencés sous forme de quatre ouvertures en forme de fenêtre (38, 138).

8. Dispositif d'accouplement (10) selon l'une des revendications précédentes,
**caractérisé en ce que** l'unité de réception (12, 112) présente un boîtier (16, 116) dans lequel est reçu l'élément de fermeture (34, 134), où le boîtier (16, 116) présente une saillie (30, 130) s'étendant radialement vers l'intérieur, qui est conçue pour entrer en contact avec l'élément de fermeture (34, 134), en particulier un élément d'étanchéité (44, 144) disposé sur l'élément de fermeture (34, 134), dans la position fermée de l'élément de fermeture (34, 134).

9. Dispositif d'accouplement (10) selon la revendication 8,
**caractérisé en ce que** la saillie (30, 130) est munie d'un flanc oblique, de sorte qu'une section transversale progressivement décroissante de l'intérieur du boîtier (16, 116) résulte de la saillie (30, 130) dans une direction de la position de libération vers la position fermée de l'élément de fermeture (34, 134).

10. Dispositif d'accouplement (10) selon la revendication 8 ou 9,
**caractérisé en ce que** le boîtier (16, 116) de l'unité de réception (12, 112) est agencé en plusieurs parties, en particulier en deux parties.

11. Dispositif d'accouplement (10) selon la revendication 10,
**caractérisé en ce qu'**une première partie de boîtier (20, 120), qui comprend la première extrémité (22), est reliée de manière étanche aux fluides à une deuxième partie de boîtier (18), qui comprend la deuxième extrémité, en particulier à l'aide d'un procédé de soudage par rotation ou d'un procédé de soudage laser.

12. Dispositif d'accouplement (10) selon l'une des revendications 8 à 11,
**caractérisé en ce qu'**au moins une nervure en saillie (76) est disposée sur le boîtier (16), qui est conçue pour définir la position de libération de l'élément de fermeture (34) en appui contre l'élément de fermeture (34).
